# EUROPEAN PATENT SPECIFICATION

(11) **EP 1 283 396 B1**
(45) Date of publication and mention of the grant of the patent: **07.03.2007**
(21) Application number: 02016731.8
(22) Date of filing: 26.07.2002
(51) Int. Cl.: F24F 11/00, G05D 23/19

(54) **Programmable modular adjusting apparatus**
Programmierbare modulare Regelvorrichtung
Dispositif de réglage modulaire programmable

(30) Priority: 09.08.2001 IT MI20010473 U
(43) Date of publication of application: 12.02.2003
(73) Proprietor: IMIT S.p.A., I-28053 Castelletto Ticino (Novara) (IT)
(72) Inventor: Zucco, Mario, 28053 Castelletto Ticino (Novara) (IT); Benichou, Fabrice, 28053 Castelletto Ticino (Novara) (IT)
(74) Representative: Lecce, Giovanni

(56) References cited:
- EP-A- 0 720 077
- DE-U1- 29 812 894
- US-A- 4 621 336
- US-B1- 6 196 467

## Description

The present invention relates to a programmable modular adjusting apparatus.

More particularly, the present invention relates to an analog-to-digital modular apparatus for the programmed adjusting of room temperature used in heating and conditioning fields.

These kinds of apparatus are generally called thermostats, that is to say programmable thermostats as they can be programmed on a daily or weekly basis.

It is known that in the civil and industrial building, heating or conditioning plants are connected to apparatuses allowing to adjust the temperature of the various rooms, sometimes with a division in two or more areas; these apparatuses, that is to say the mentioned thermostats or programmable thermostats, are installed in one or more rooms for the remote connection to the heating or conditioning plant.

With particular reference to the heating field, programmable thermostats are more and more used as they allow programming the desired temperature and fixing the switching on/off of the plant during some hours of the day; this kind of solution is particularly advantageous as it allows the optimisation of energetic consumptions.

These programmable thermostats also allow differentiating or adjusting in a differentiated way the room temperature in the different times, for instance reducing it during the night; an improved type of programmable thermostat also allows the weekly programming of the temperature and it is generally installed in working environments in order to avoid unnecessary consumptions during holidays. These apparatuses can be powered by connection to the supply mains or replaceable batteries; in some cases a transmitting-receiving system remotely interacting with the boiler is provided particularly when the connection to the supply mains is difficult or impossible

It has been noticed that the known programmable thermostats show some considerable drawbacks concerning both the final user and the installers.

As far as the final user is concerned, it must be noticed that he/she has difficulties in programming the programmable thermostats, particularly the ones of the so-called digital type as specific "menus" access and the activation of various keys according to preset and critical sequences are required; moreover, in these apparatuses the programming commands are generally constituted by micro switches and they can be activated only with the help of sharpened tools; in addition to the practical difficulty of intervention, there is also the risk of damaging the apparatus if, for instance, the pressure acted on the switches is excessive or acted in a wrong position.

Even the most traditional analog programmable thermostats show setting or programming difficulties as they require the accurate positioning and locking of various electromechanical contact elements in correspondence of the activation time periods or hours of the plant which is connected to them.

A further drawback occurring in the well-known programmable thermostats directly concerns the installers and the manufacturers of said apparatuses. Due to the various alternatives offered, ranging from the analog type to the digital one with battery supply or transmitting-receiving system, daily or weekly adjusting, the known programmable thermostats have a broad range of components to be combined among them in a critical way and this implies the need of producing and having high quantities of different elements available in stock with the subsequent space and cost problems.

US- 4 621 336 discloses a programmable thermostat provided with short stroke keys for the adjusting and programming of time periods and with a square-shaped display which is surrounded by time indicia and is further provided with selectively energized display elements on its periphery, said programming short stroke keys being arranged in a laterally located keypad.

US-B1-6 196 467 concerns a method for wirelessly programming a programmable thermostat.

Object of the present invention is to remedy the drawbacks of the prior art.

More particularly, the object of the present invention is to carry out a programmable modular adjusting apparatus, particularly a programmable thermostat for heating and conditioning plants which can be easily and quickly programmed by the user.

A further object of the present invention is to carry out a programmable thermostat apparatus as defined above which can be daily or weekly programmed and integrating both the analog and digital functions, the latter in order to obtain an easy display of the programmed periods.

Another object of the present invention is to carry out an apparatus whose basic components are interchangeable among them, thus avoiding the need of arranging and keeping available a high number of elements to be assembled among them according to the type of programmable thermostat to be obtained.

A further object of the invention is to provide users with a programmable modular adjusting apparatus or programmable thermostat which can guarantee a high level of resistance and reliability in time; moreover it should easily and economically carried out.

These and other objects are obtained through the programmable modular adjusting apparatus as claimed in claim 1. Further advantageous features of the invention are recited by the dependent claims.

The building and operating features of the programmable modular adjusting apparatus of the present invention will be better understood by the following description wherein reference is made to the table of the enclosed drawings representing a preferred but non-limitative embodiment of it and wherein:
Figure 1 is a schematic prospective view of the apparatus of the present invention;

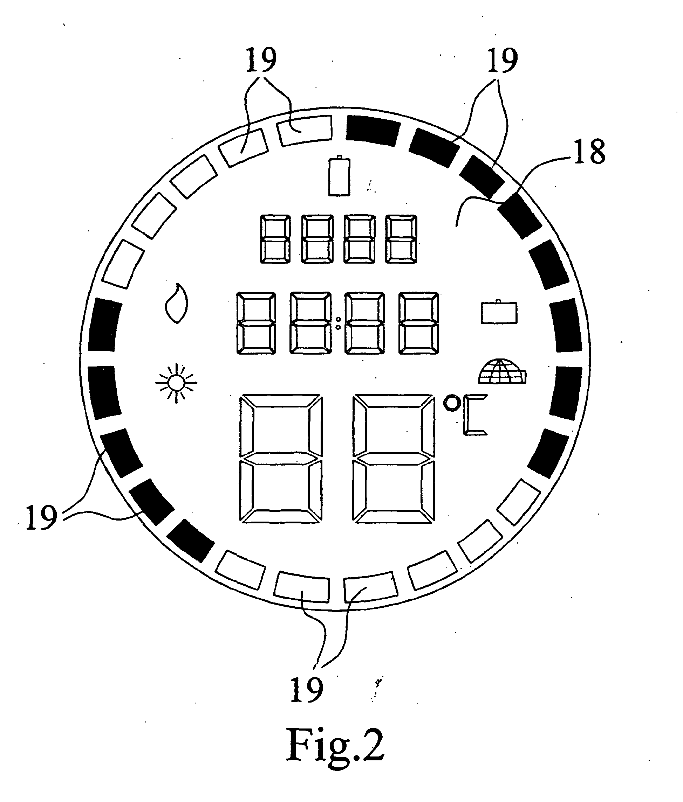

Figure 2 schematically represents the detail of the display or display screen of the same apparatus;
Figures 3, 4, 5 and 6 schematically represent as many alternative supply and/or operating solutions of the same apparatus.

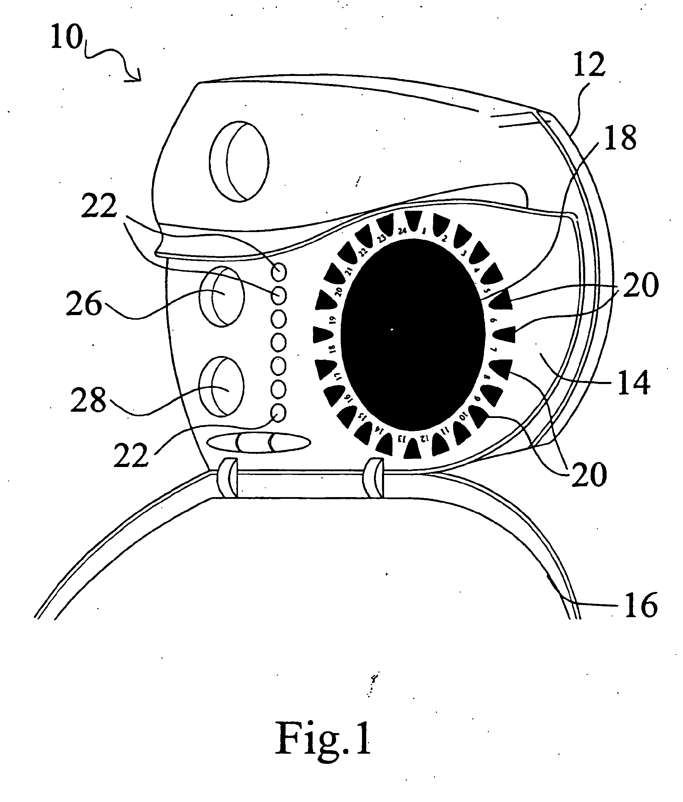

With reference to the mentioned figure, the programmable modular adjusting apparatus marked in its whole with 10 comprises a socket or base support 12 and a frontal 14 including the programming, adjusting and display means described here below. In the event of the preferred and non-critical embodiment of figure 1 said apparatus, typically a programmable thermostat, defines in its whole a flattened casing having an irregular prismatic shape which is obtained in plastic or other suitable material; on the front part it develops on two differentiated levels, preferably a movable screening element or cover 16 is hinged to said frontal 14 in order to cover it once the various adjustments have been carried out. If necessary, the cover 16 can be of transparent material, along its whole surface or part of it. The exposed surface of the frontal 14, preferably in the area which should be hidden by the cover 16, integrates or delimits a display screen 18 which is, for instance, constituted by a conventional LCD display of circular shape. Along the periphery of said screen 18 or display, a plurality of keys 20 of the so-called short stroke type is placed, each of them is marked with a number; keys 20 are as many daily setting means of the programmable thermostat connected to the relevant heating or conditioning plant and they are related to time units of one hour. Since the day is divided in 24 hours, keys 20 are as many and each of them corresponds to a precise hour. Therefore, activating said keys with a manual pressure; the programming of the apparatus is obtained as described in the following example.

It is supposed that the plant should be activated for the period comprised between 6.10 a.m. and 6.22 p.m.; in order to set this adjusting, the user will have to simply press the keys with the numbers corresponding to said hours, that is to say the ones marked with numbers 6, 7, 8 and 9 in addition to the ones marked with numbers 18, 19, 20 and 21 excluding all the others.

In fact, the key marked with 6, sets the hour from 6 to 7, the one marked with 7 sets the hour from 7 to 8 and so on.

Said keys are connected to a microprocessor, which is known in itself and stores the daily sequence, which has been set.

In an advantageous way, the user can display the time sequence set on the screen or display 18 in real time, the latter being provided with a wheel divided into 24 variable intensity small sectors 19 corresponding to the hours of the day; said sectors 19 formed in correspondence or near the keys 20 change their colour or contrast softening or sharpening them according to the manual pressure activated on the same keys.

The variable intensity sectorsl9 are also connected to the microprocessor of the apparatus which is preferably battery-powered; anyway the electric power of the apparatus with connection to the supply mains should not be excluded.

In the expected event of a programmable thermostat remotely connected with a transmitting-receiving system to the heating or conditioning plant, batteries, if necessary the lithium ones which guarantee a longer life, allow both the setting of the apparatus installed in a static position, for instance wall-mounted, and also the setting of the same placed on a piece of furniture such as a table or other support and the interaction with: the relevant plant to be activated through a radio transmitter and a receiver placed on said plant to be activated or through the user. In a preferred embodiment, the apparatus 10 of the present invention can be adjusted or programmed on a weekly or daily basis as it is provided with further seven keys 22 similar to the keys 20. Keys 22 are placed and protrude from the surface of the frontal 14 near the screen 18, for instance with a vertical alignment and they are also connected to the microprocessor of the apparatus; the weekly programming is connected to the daily one; once it is set, it is stored by pressing one or the other key 22 corresponding to the days of the week.

On the screen or display 18, for instance in the central position, the day of the week corresponding to the programming set, is advantageously highlighted; along the same area, which is externally delimited by the variable intensity sectors 19 indicating the preselected time periods, other data is preferably highlighted such as the selected room temperature.

The room temperature, with the proper variations related to daytime and night time, is set through conventional graduated scale switches 26-28 whose function is well known.

The object is to join the programming easiness of a fixed segment analog watch to the reading one, the ergonomics and the most competitive price with respect to a digital watch.

This is obtained reproducing in a graphical way the position of the fixed segments on the display through the mentioned keys placed around the same display in order to highlight said segments and lightening the relevant concerned part.

According to a further advantageous feature, the apparatus of the present invention shows said base support 12 and frontal 14 which are interchangeable between them.

It follows that, for this structural layout, the apparatus 10 can be advantageously composed in an alternative way according to the various requirements as a base support 12 common to frontals 14 prearranged in order to house means 20, that is to say keys for the daily programmed adjusting or even the keys 22 for the additional weekly programming and also for a battery supply, if necessary, with a connection to the supply mains or remote control of the plant through a receiving-transmitting system can be matched. To this purpose, the base support 12 is provided with suitable housing seats which are schematised in figures from 3 to 6 for the above mentioned power and remote control devices of the plant.

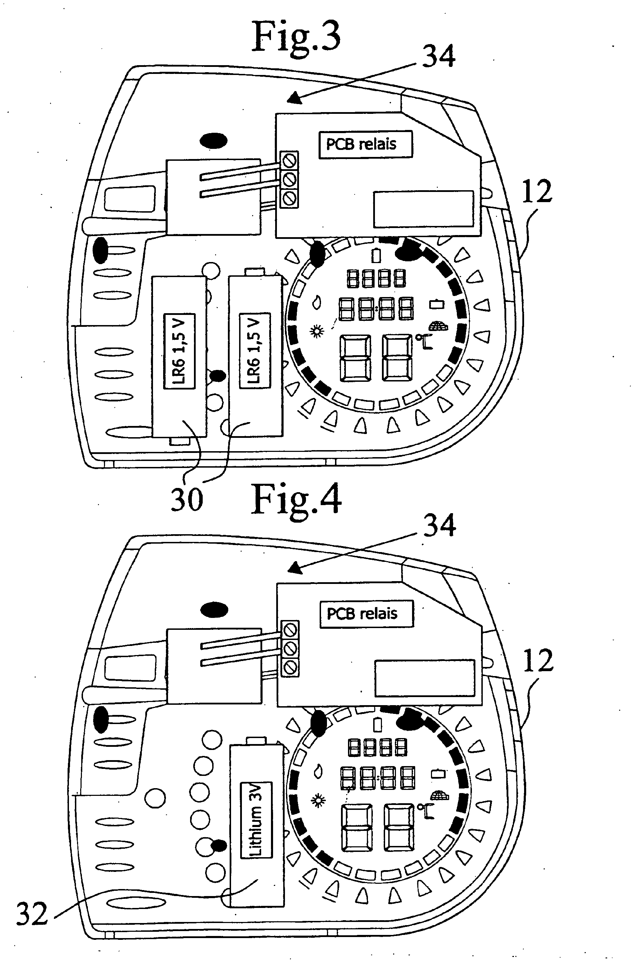

In particular, figures 3 and 4 respectively show the layout in the socket or base support 12 of a couple of conventional replaceable batteries marked with 30 and of one lithium battery 32, in both cases, said batteries are connected to a power switch 34 controlled by the electronic part or microprocessor of the apparatus.

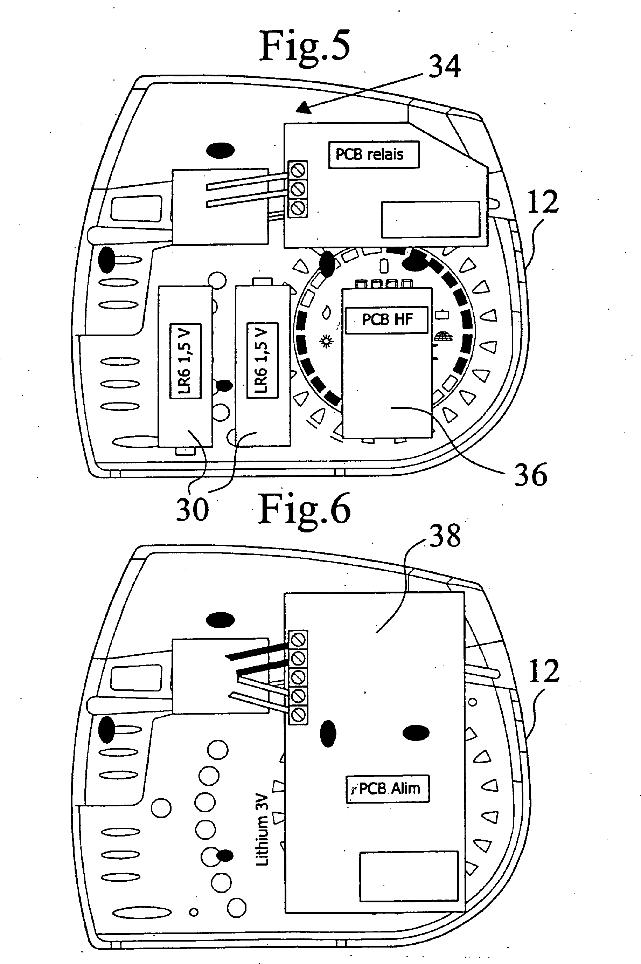

Figure 5 shows another embodiment of figure 3 referred to presence of a radio transmitter 36 interacting with a receiver (which is not represented) placed on the user or plant to be activated. This is the solution with a remote control wherein the apparatus is not wall-mounted but it is movable and transportable.

Figure 6 relates to a further alternative supply mains solution of the apparatus through a transformer 38 which is integrated in the socket 12.

As above mentioned, the frontal 14 is prearranged according to two variants only which refer to presence of keys 20 only or of both the series of keys 20 and 22 respectively for the daily and weekly programming.

As it can be noticed from the above-mentioned description, the advantages of the present invention are clear.

The programmable modular adjusting apparatus of the present invention, particularly a programmable thermostat for heating and conditioning plants can be programmed in an easy, intuitive and quick way thanks to the presence of keys 20 and/or 22; said keys of the short stroke type are also easily activated and they do not require the use of sharpened tools.

The display of the programmed time periods is clear on the screen 18 thanks to the digital component adding to the analog adjusting traditional one through keys and to the display of luminous segments or variable intensity ones 19. The presence of a base support 12 which is common to various versions, that is to say it can be matched with two or more types of frontals 14, is particularly advantageous both for production and installation; as far as the installation is concerned, the user can also postpone the choice of the apparatus 10 to be used until the last moment as the support 12 which is already wall-mounted or placed in a fixed position is not binding.

As described above and here below claimed, the invention has been proposed as a non-limitative example as it is understood that it can be subject to changes and variants all of them falling within the scope of the innovative concept.

## Claims

1. A programmable modular adjusting apparatus (10) of the programmable thermostat type for heating or conditioning plants, comprising a flattened casing with a socket or base support (12) and a frontal (14), said apparatus being provided with means (20, 22) for the analog adjusting and programming of time periods comprising a plurality of short stroke keys, and with digital display means (18) of said adjusting and programming surrounded by time indicia, said display means (18) being further provided with a plurality of variable intensity sectors (19) adapted to highlight the temporary programming selecting, all said means being connected and interacting with a microprocessor integrated in said support (12),
**characterized in that** the daily setting keys (20) of said short stroke keys are arranged along the periphery of said display means (18).

2. A programmable modular adjusting apparatus (10) as claimed in claim 1, **characterized in that** said display means (18) has a circular shape and each of said peripherally arranged keys (20) corresponds to one of the twenty-four hours.

3. A programmable modular adjusting apparatus (10) as claimed in claim 2, **characterized in that** said digital display means (18) is externally delimited by said plurality of variable intensity sectors (19) forming all along a wheel, each one of them being connected and activated by one of said peripherally arranged keys (20) so as to change its luminous colour, contrast and intensity in order to highlight the temporary programming selected.

4. A programmable modular adjusting apparatus (10) as claimed in any of the preceding claims, **characterized in that** the keys (22) that are not peripherally arranged, are placed along the frontal (14) from which they protrude with a vertical or horizontal alignment, each of them corresponding to a day of the week.

5. A programmable modular adjusting apparatus (10) as claimed in any of the preceding claim, **characterized in that** said base support (12) can be associated in an interchangeable way with at least two frontals (14) which are different between them according to the presence of the keys (20) or (20) and (22).

6. A programmable modular adjusting apparatus (10) as claimed in any of the preceding claims, **characterized in that** the support (12) is prearranged in such a way to house the power batteries (30) and/or (32) and/or transmitting-receiving means (36) for the activation without electric connections to the heating or conditioning plant.

7. A programmable modular adjusting apparatus (10) as claimed in any of the preceding claims, **characterized in that** the support (12) houses a transformer (38) for the connection to the supply mains.

8. A programmable modular adjusting apparatus (10) as claimed in any of the preceding claims, **characterized in that** a folding cover (16) is associated to the support (12) to cover the frontal (14) or a part of it.

## Patentansprüche

1. Programmierbare modulare Einstellvorrichtung (10) vom programmierbaren Thermostattyp für Heizungs- oder Konditionierungsanlagen, umfassend ein abgeflachtes Gehäuse mit einem Sockel oder Basisträger (12) und einer Front (14), wobei die Vorrichtung mit Mitteln (20, 22) für das analoge Einstellen und Programmieren von Zeitperioden versehen ist, umfassend eine Mehrzahl von Kurzhubtasten, und mit digitalen Anzeigemitteln (18) der Einstellung und Programmierung, die durch Zeitanzeigen umgeben ist, wobei das Anzeigemittel (18) ferner mit einer Mehrzahl von Sektoren (19) variabler Intensität versehen ist, das zum Markieren der zeitweiligen Programmauswahl geeignet ist, wobei alle die Mittel mit einem in dem Träger (12) integrierten Mikroprozessor verbunden sind und mit diesem interagieren,
**dadurch gekennzeichnet, dass** die Tageseinstelltasten (20) der Kurzhubtasten entlang des Umfangs des Anzeigemittels (18) angeordnet sind.

2. Programmierbare, modulare Einstellvorrichtung (10) nach Anspruch 1, **dadurch gekennzeichnet, dass** das Anzeigemittel (18) eine Kreisform aufweist und jede der umfänglich angeordneten Tasten (20) einer der vierundzwanzig Stunden entspricht.

3. Programmierbare, modulare Einstellvorrichtung (10) nach Anspruch 2, **dadurch gekennzeichnet, dass** das digitale Anzeigemittel (18) extern durch die Mehrzahl von Sektoren (19) variabler Intensität begrenzt ist, die zusammen ein Rad bilden, wobei jede von diesen angeschlossen ist und durch eine der umfänglich angeordneten Tasten (20) aktiviert wird, um so ihre Beleuchtungsfarbe, Kontrast und Intensität zu ändern, um die gewählte zeitweilige Programmierung zu markieren.

4. Programmierbare, modulare Einstellvorrichtung (10) nach irgendeinem der vorhergehenden Ansprüche, **dadurch gekennzeichnet, dass** die Tasten (22) nicht umfänglich angeordnet sind, entlang der Front (14) platziert sind, aus welcher diese mit einer vertikalen oder horizontalen Ausrichtung herausragen, wobei jede von diesen einem Tag der Woche entspricht.

5. Programmierbare, modulare Einstellvorrichtung (10) nach irgendeinem der vorhergehenden Ansprüche, **dadurch gekennzeichnet, dass** der Basisträger (12) in einer austauschbaren Weise zumindest zwei Fronten (14) zugeordnet werden kann, welche unter diesen gemäß dem Vorliegen der Tasten (20) oder (20) und (22) unterschiedlich sind.

6. Programmierbare, modulare Einstellvorrichtung (10) nach irgendeinem der vorhergehenden Ansprüche, **dadurch gekennzeichnet, dass** der Träger (12) in solch einer Weise zuvor angeordnet ist, dass Stromversorgungsbatterien (30) und/oder (32) und/oder Übertragungsempfangsmittel (36) für die Aktivierung ohne elektrische Anschlüsse zu der Heizung oder Konditionierungsanlage aufgenommen werden.

7. Programmierbare, modulare Einstellvorrichtung (10) nach irgendeinem der vorhergehenden Ansprüche, **dadurch gekennzeichnet, dass** der Träger (12) einen Transformer (38) für den Anschluss an Zufuhrhauptleitungen aufnimmt.

8. Programmierbare, modulare Einstellvorrichtung (10) nach irgendeinem der vorhergehenden Ansprüche, **dadurch gekennzeichnet, dass** eine Faltabdeckung (16) dem Träger (12) zum Abdecken der Front (14) oder eines Teils davon zugeordnet ist.

## Revendications

1. Dispositif de réglage modulaire programmable (10), particulièrement du type thermostat programmable pour installations de chauffage ou d'air conditionné de toutes configurations et dimensions, constitué par un boîtier plat en matière plastique ou autre matière appropriée comprenant un socle ou support de base (12) et une façade (14); ledit dispositif comportant un moyen (20) et/ou (22) de réglage analogique et de programmation de périodes temporelles et un moyen d'affichage numérique (18) dudit réglage et de ladite programmation, ledit moyen étant connecté et interagissant avec un microprocesseur intégré dans ledit support (12).

2. Dispositif selon la revendication 1, **caractérisé en ce que** ledit moyen (20) consiste en une pluralité de courtes touches en saillie qui se développent sur un cercle le long de ladite façade (14) et qui correspondent chacune à l'une des vingt-quatre heures.

3. Dispositif selon l'une quelconque des revendications précédentes, **caractérisé en ce que** ledit moyen d'affichage (18) consiste en un écran ou un affichage qui est délimité à l'extérieur par une pluralité de secteurs (19) d'intensité variable qui forment ensemble la périphérie d'une roue, et sont connectés chacun à l'une desdites touches (20) qui l'active d'une manière telle que la couleur lumineuse, le contraste et l'intensité de ce secteur varient afin d'accentuer la programmation temporaire sélectionnée.

4. Dispositif selon l'une quelconque des revendications précédentes, **caractérisé en ce que** ledit moyen (22) consiste en courtes touches placées le long de la façade (14) à partir de laquelle elles font saillie en étant alignées verticalement ou horizontalement, chacune d'elles correspondant à un jour de la semaine.

5. Dispositif selon l'une quelconque des revendications précédentes, **caractérisé en ce que** ledit support de base (12) peut être associé de manière interchangeable à au moins deux façades (14) qui diffèrent l'une de l'autre quant à la présence, soit des touches (20), soit des touches (20) et (22).

6. Dispositif selon l'une quelconque des revendications précédentes, **caractérisé en ce que** le support (12) est préalablement agencé de manière à loger des batteries d'alimentation (30) et/ou (32), et/ou des moyens transmetteurs récepteurs (36) pour activer l'installation de chauffage ou d'air conditionné sans aucune connexion électrique avec celle-ci.

7. Dispositif selon l'une quelconque des revendications précédentes, **caractérisé en ce que** le support (12) loge un transformateur (38) pour la connexion avec le moyen d'alimentation.

8. Dispositif selon l'une quelconque des revendications précédentes, **caractérisé en ce qu'**un couvercle repliable (16) est associé au support (12) pour couvrir la totalité ou une partie de la façade (14).
